# EUROPÄISCHE PATENTANMELDUNG

(11) **EP 4 838 779 A1**
(43) Veröffentlichungstag der Anmeldung: **11.11.2026**
(21) Anmeldenummer: 25174320.9
(22) Anmeldetag: 05.05.2025
(51) Int. Cl.: H02S 20/23, H02S 40/22, F24S 20/25

(54) **VERFAHREN ZUR MONTAGE VON MODULEN AUF EINEM DACH**

(71) Anmelder: KWenergy GmbH, 2562 Port (CH)
(72) Erfinder: Wehrli, Kilian, 2560 Nidau (CH)
(74) Vertreter: AMMANN PATENTANWÄLTE AG

(57) **Zusammenfassung**

Beim Verfahren zur Montage von Modulen (2), vorzugsweise Photovoltaikmodulen und/oder thermischen Solarmodulen, auf einem Dach eines Gebäudes (1), insbesondere auf einer Leichtbauhalle mit einer Membrane (5) als Dach, wird mindestens ein Teil der Module beabstandet zueinander montiert zur Bildung eines Zwischenraums (3) zwischen zwei Modulen. Es sind, Umlenkungsmittel (5, 10) vorgesehen, die eingerichtet sind, Tageslicht (6), welches in den Zwischenraum einfällt, auf die jeweilige Rückseite der Module umzulenken, zwischen welchen sich der Zwischenraum befindet. Eine Beleuchtungseinrichtung zur Verwendung in dem Verfahren umfasst Platzhalter (7, 8), wobei der jeweilige Platzhalter zwischen zwei Modulen (2) anbringbar ist zur Bildung eines Zwischenraums (3) dazwischen, und Umlenkungsmittel (5, 10).

## Beschreibung

Die vorliegende Erfindung betrifft ein Verfahren zur Montage von Modulen, vorzugsweise Photovoltaikmodulen und/oder thermischen Solarmodulen, auf einem Dach.

Aus dem Stand der Technik sind diverse Montagesysteme für Schrägdächer auf dem Markt erhältlich. Sind die Module in gleicher Schräglage wie das Dach angeordnet, sieht keiner dieser Systeme vor, die Rückseite der Module zu beleuchten und somit einen höheren Energieertrag zu bewirken.

Es ist daher die Aufgabe der vorliegenden Erfindung ein Verfahren zur Montage von Modulen auf einem Dach sowie eine Beleuchtungseinrichtung zur Verwendung in diesem Verfahren anzugeben, welches es erlaubt, die Module effizienter zu nutzen.

Diese Aufgabe wird durch das Verfahren gemäss Anspruch 1 und die Beleuchtungseinrichtung gemäss Anspruch 8 gelöst. Die weiteren Ansprüche geben bevorzugte Ausführungen an sowie ein Modulmontagesystem mit einer Beleuchtungseinrichtung und ein Gebäude, auf welchem Module nach dem erfindungsgemässen Verfahren montiert sind.

Gemäss Anspruch 1 wird beim Verfahren mindestens ein Teil der Module beabstandet zueinander montiert zur Bildung eines Zwischenraums zwischen zwei Modulen, wobei Umlenkungsmittel vorgesehen werden, die eingerichtet sind, Tageslicht, welches in den Zwischenraum einfällt, insbesondere Sonnenlicht, umzulenken auf die jeweilige Rückseite der Module, Dies ermöglicht eine bessere Ausnutzung der Module, z.B. wenn diese als bifaziale Photovoltaikmodule und/oder thermische Solarmodule ausgebildet sind.

Vorzugsweise werden die Module so montiert, dass mindestens die Hälfte der Module, bevorzugt mindestens drei Viertel der Module und besonders bevorzugt alle der Module, benachbart zu einem Zwischenraum angeordnet sind.

Vorzugsweise werden die Module so montiert, dass bei mindestens der Hälfte der Module, bevorzugt bei mindestens drei Vierteln der Module und besonders bevorzugt bei allen Modulen, ein Modul an zwei gegenüberliegenden Endseiten benachbart zu einem Zwischenraum angeordnet ist.

Die Module können gemäss dem erfindungsgemässen Verfahren so montiert werden, dass Tageslicht durch eine einfache Öffnung, über Reflektoren (Spiegel), über Streumittel, über Beugemittel wie Linsen und/oder über ein lichtleitendes Medium neben und/oder hinter die Module gebracht werden kann.

Das Verfahren ist besonders vorteilhaft bei einem Schrägdach, da die Module nicht aufgestellt werden müssen, sondern in der gleichen Schräglage wie das Dach angebracht werden können.

In einem Zwischenraum kann ein Element angeordnet sein, das Tageslicht direkt, indirekt oder z.B. über Reflektoren hinter die Module bringt.

Ist das Dach als halb- oder transparente Dachhaut ausgebildet, so erlaubt ein jeweiliger Zwischenraum, dass auch Licht durch die Dachhaut in den darunterliegenden Raum transportiert werden kann, wodurch am Tag der Raum beleuchtet werden kann, was wiederum Energie spart, da am Tage kein Licht eingeschaltet werden muss.

In einem Zwischenraum kann ein Platzhalter angeordnet sein, der vorzugsweise gleich oder ähnlich wie ein Modul verbaut werden kann und den alltäglichen Witterungsbedingungen sowie den Reinigungsprozessen standhält.

Bei einer Ausführungsform wird lediglich eine Öffnung vorgesehen, welche z.B. durch einen Platzhalter definiert ist. Diese Öffnung lässt auf natürliche Weise das Tageslicht zwischen den Modulen hindurchscheinen. Die Strahlen können auf der Dachhaut reflektiert und/oder gestreut werden und gelangen so direkt oder indirekt auf die Rückseite der Module.

In einer anderen Variante wird die Öffnung durch ein Glas oder lichtdurchlässiger Kunststoff abgedeckt. Dieses Glas oder der lichtdurchlässige Kunststoff lässt aber immer noch das Tageslicht durch die Öffnung hindurchscheinen. Das Glas oder der Kunststoff kann mit verschiedenen Beschichtungen versehen sein, damit es weniger Oberflächenreflektionen gibt.

In einer weiteren Variante können eine oder mehrere optische Linsen und/oder ein lichtdurchlässiger Körper, welcher mit Linsen bestückt oder geprägt ist, vorgesehen sein, um Tageslicht gebündelt durch einen Zwischenraum zwischen den Modulen hinter die Module zu bringen.

Gemäss noch einer weiteren Ausführungsvariante, kann mittels Reflektoren und/oder Beugemittel und/oder Streumittel Tagelicht, insbesondere, gezielt durch einen Zwischenraum zwischen den Modulen hinter die Module gebracht werden. Licht kann dabei direkt auf die Rückseite eines Moduls und/oder auf die Dachhaut treffen.

In einer weiteren Ausführungsvariante kann mittels Lichtleitern Tageslicht hinter die Module gebracht werden.

Nebst den oben erwähnten Lösungen sind auch noch andere Varianten möglich.

Die Zwischenräume und Platzhalter können auf einem vorgegeben Raster zur Bildung eines gewünschten Musters in die Installation eingebracht werden. So kann eine homogene Beleuchtung der Modulrückseiten und/oder der Halle mit lichtdurchlässiger Gebäudehülle erreicht werden.

Nach einem weiteren Aspekt der vorliegenden Erfindung ist die Beleuchtungseinrichtung als Teil eines Modulmontagesystems vorgesehen, welches Modulträger aufweist, an welchem Module montierbar sind. Die Modulträger können z.B. gerade Profile und/oder faltbar sein durch Vorsehen einer gelenkigen Verbindung.

Es können verschiedene Arten von Modulen montiert werden, flache Module, flexible und/oder gebogene Module, Photovoltaikmodule, insbesondere bifaziale Photovoltaikmodule, thermische Solarmodule etc.

Die Erfindung wird nachfolgend anhand mehrerer Ausführungsvarianten dargestellt. Die einzelnen technischen Merkmale einer Ausführungsvariante können auch in Kombination mit einer anderen Ausführungsvariante mit den dargelegten Vorteilen verwendet werden. Die Beschreibung der technischen Merkmale ist daher nicht auf die jeweilige Ausführungsvariante beschränkt.

Vorteilhafte Ausführungsformen der Erfindung werden im Folgenden anhand der Zeichnungen dargestellt, die lediglich zur Erläuterung dienen und nicht einschränkend auszulegen sind. Aus den Zeichnungen offenbar werdende Merkmale der Erfindung sollen einzeln und in jeder Kombination als zur Offenbarung der Erfindung gehörend betrachtet werden. In den Zeichnungen zeigen:
Fig. 1 eine schematische dreidimensionale Ansicht eines kompletten möglichen Aufbaus einer Modulinstallation mit Beleuchtungseinrichtung nach der Erfindung,
Fig. 2a eine schematische zweidimensionale Ansicht eines Ausschnittes aus der Darstellung gemäss Fig. 1,

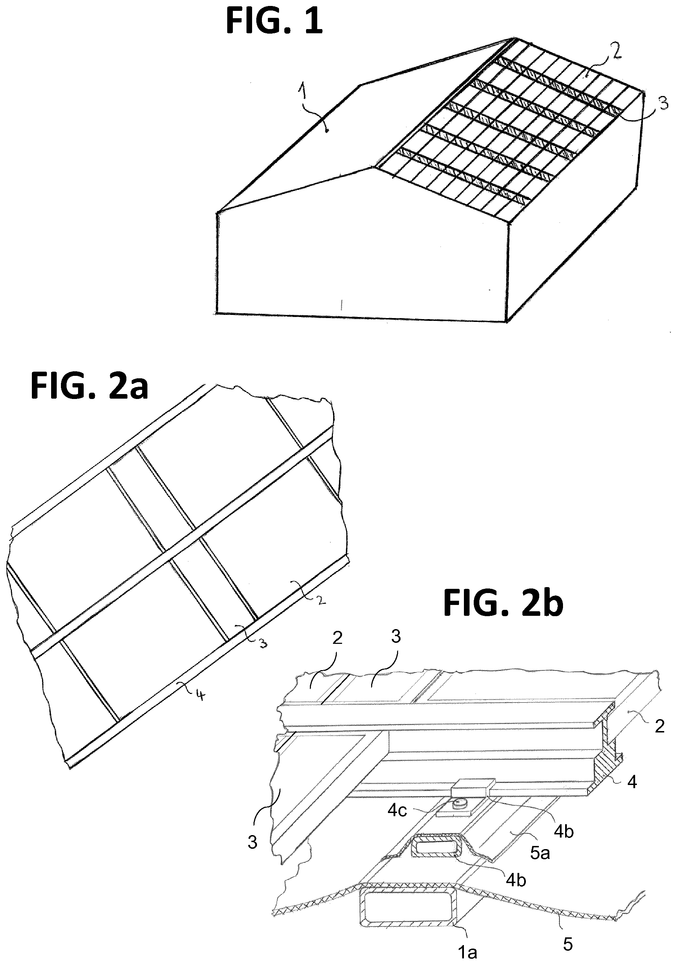

Fig. 2a eine schematische dreidimensionale Ansicht einer Nahaufnahme von Modulen und Beleuchtungseinrichtung nach der Erfindung auf einer Leichtbauhalle,

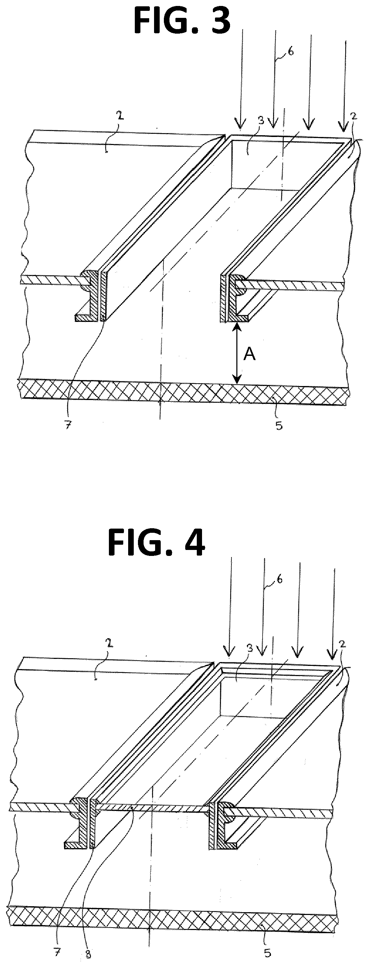

Fig. 3 eine schematische dreidimensionale Ansicht einer Nahaufnahme einer Ausführungsform der Beleuchtungseinrichtung nach der Erfindung,
Fig. 4 eine schematische dreidimensionale Ansicht einer Nahaufnahme einer Variante der Beleuchtungseinrichtung nach der Erfindung,

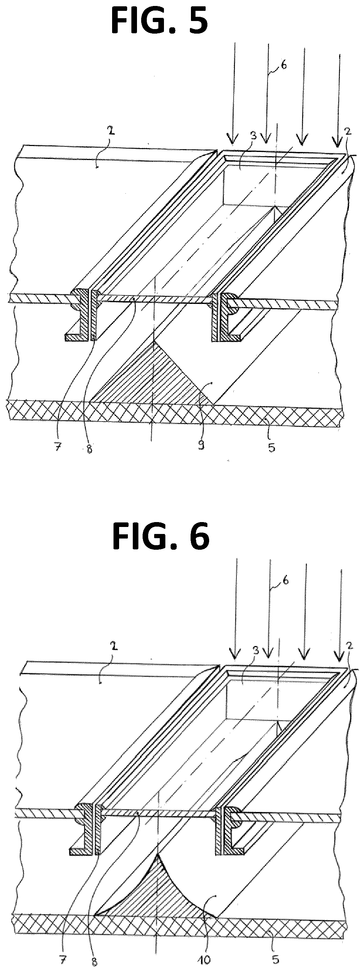

Fig. 5 eine schematische dreidimensionale Ansicht einer Nahaufnahme einer weiteren Variante der Beleuchtungseinrichtung nach der Erfindung,
Fig. 6 eine schematische dreidimensionale Ansicht einer Nahaufnahme einer weiteren Variante der Beleuchtungseinrichtung nach der Erfindung,

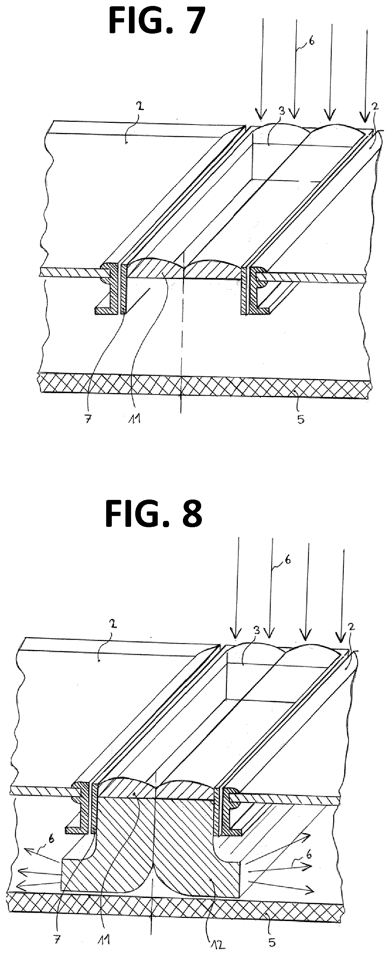

Fig. 7 eine schematische dreidimensionale Ansicht einer Nahaufnahme einer weiteren Variante der Beleuchtungseinrichtung nach der Erfindung, und
Fig. 8 eine schematische dreidimensionale Ansicht einer Nahaufnahme einer weiteren Variante der Beleuchtungseinrichtung nach der Erfindung,

In den Figuren werden verschiedene Ausführungsvarianten gezeigt, welche beim erfindungsgemässen Verfahren anwendbar sind. Bei der Zusammenstellung ist nur ein Beispiel von einer möglichen Anordnung aufgezeigt. Zudem können die Ausführungen von den Figuren abweichen. In Fig. 1 und 2 wird ein möglicher komplett Aufbau gezeigt. Figuren 3 bis 8 zeigen verschiedene Varianten der Beleuchtungseinrichtung.

Beim Verfahren zur Montage von Modulen, vorzugsweise Photovoltaikmodulen und/oder thermischen Solarmodulen, wird mindestens ein Teil der Module beabstandet zueinander montiert zur Bildung eines Zwischenraums zwischen zwei Modulen. Es sind Umlenkungsmittel vorgesehen, die eingerichtet sind, Tageslicht, welches in den Zwischenraum einfällt, umzulenken auf die jeweilige Rückseite der Module, zwischen welchen sich der Zwischenraum befindet. Bei einem zumindest teilweisen durchlässigen Dach können die Umlenkungsmittel zusätzlich auch Tageslicht auf das Dach lenken, so dass es in den darunterliegenden Raum gelangen kann, um diesen zu beleuchten.

In Fig. 1 ist ein möglicher kompletter Aufbau auf einem Gebäude 1 einer Modulinstallation mit vorgesehener Beleuchtungseinrichtung dargestellt. Die Module 2, z.B. bifaziale Photovoltaikmodule und/oder thermische Solarmodule, sind dachparallel, d.h. in der gleichen Schräglage wie das Dach angeordnet und in Längsrichtung des Gebäudes 1 verlaufenden Reihen. Zwischen den Modulen 2 in einer Reihe ist ein Zwischenraum 3 vorgesehen, welcher beispielsweise durch einen Platzhalter belegt sein kann. Die Zwischenräume 3 sind hier so angeordnet, dass sie in Linien angeordnet sind, die quer zu den Reihen verlaufen. Die Zwischenräume 3 können auch auf einem anderen Raster angeordnet sein. Es ist z.B. denkbar, dass die Module 2 jeweils in einer Reihe vorzugsweise lückenlos zueinander angeordnet werden und jeweils zwischen zwei Reihen ein Zwischenraum 3 vorgesehen ist. Es ergeben sich somit Reihen von Zwischenräumen 3, die jeweils zwischen zwei Reihen von Modulen 2 angeordnet sind.

Allgemein kann sich ein Zwischenraum 3 benachbart zu einer Längsseite und/oder Querseite eins Moduls 2 befinden.

In Fig. 2a ist ein Ausschnitt des möglichen Aufbaus dargestellt. Es sind Modulträger in Form von Einlegeprofilen 4 dargestellt, auf welchen die Module 2 verlegt sind und welche hier zur Bildung von Reihen in Längsrichtung des Gebäudes 1 verlaufen. Im hier gezeigten Beispiel befinden sich die Zwischenräume 3 zwischen zwei Modulen 2 in einer Reihe, während Module benachbarter Reihen an den gleichen Modulträgern 4 angebracht sind und somit lückenlos angeordnet sind.

Der Abstand zwischen zwei Modulen 2 zur Bildung des Zwischenraums beträgt mindestens 10 cm, vorzugsweise mindestens 15 cm, und/oder maximal eine Länge eines Moduls 2, vorzugsweise maximal ein halbe Länge eines Moduls 2.

Das Gebäude 1 kann insbesondere eine Leichtbauhalle sein, welche eine Fachwerkstruktur aus Fachwerkprofilen 1a und eine Dachhaut in Form einer Membrane 5 aufweist, vgl. Fig. 2b. Diese ist auf der Fachwerkstruktur verlegt und bildet somit u.a. das Dach. Die Membrane 5 ist vorzugsweise aus Kunststoff, z.B. PVC, gefertigt. Die Membrane 5 ist mit Taschen 5a versehen, die jeweils z.B. aus dem gleichen Material wie die Membrane gefertigt und an die Membrane 5 z.B. angeschweisst sind. Eine Tasche 5a ist so angeordnet, dass sie in einem Bereich der Membrane 5 angeordnet ist, welcher auf einem Fachwerkprofil 1a aufliegt.

In eine Tasche 5a ist ein Einschubprofil 4a eingefügt. Die Modulträger 4 verlaufen quer zu den Einschubprofilen 4a. und sind mittels Klemmen 4b und z.B. Selbstbohrschrauben 4c am Einschubprofil 4a fixiert.

Die Dachhaut 5 ist flexibel ausgestaltet und kann zwischen zwei benachbarten Taschen 5a etwas durchhängen. Die Module 2 sind so angeordnet, dass sich das Einschubprofil 4a sich etwa in der Mitte eines Moduls 2 befindet. Ein Zwischenraum 3 befindet sich somit zwischen zwei Einschubprofilen 4a. Es ist dadurch ein seitlicher Zugang zwischen Modul 2 und Dachhaut 5 gegeben, durch welchen hindurch Tageslicht, welches in den Zwischenraum 3 einfällt, auf die Rückseite des Moduls 2 gelangen kann.

In einer Ausführungsform ist die Dachhaut 5, insbesondere Membrane, so beschaffen, dass zumindest ein Teil des Tageslichts reflektiert und/streut wird. Die Dachhaut 5 ist beispielsweise von heller Farbe, z.B. weiss. Beim Beispiel gemäss Fig. 2b hängt die Membrane 5 etwas durch, so dass sich eine konkave Krümmung ergibt, die bewirkt, dass das einfallende Tageslicht effizienter umgelenkt wird auf die Rückseite eines Moduls 2.

Die Dachhaut 5, insbesondere Membrane, kann so beschaffen sein, dass sie zumindest für einen Teil des Tageslichts durchlässig ist, so dass das einfallende Tageslicht zumindest teilweise in den Raum unterhalb der Dachhaut 5 gelangen kann und somit diesen beleuchtet.

In den nachfolgenden Fig. 3-8 ist jeweils die Dachhaut 5 als ebene Schicht dargestellt. Sie kann jedoch auch gekrümmt sein, z.B. so wie in Fig. 2b angedeutet. Der Abstand A (vgl. Fig. 3) zwischen der Endseite eines Moduls 2, welches an einen Zwischenraum angrenzt, und des Daches 5 beträgt mindestens 5 cm, vorzugsweise mindestens 10 cm.

In Fig. 3 ist eine Ausführungsvariante mit einem Platzhalter gezeigt, der einen Rahmen 7 aufweist, hier einen rechteckigen. Der Platzhalter 7 ist z.B. zusammen mit den Modulen 2 an Modulträgern 4 eingelegt. Das Vorsehen des Platzhalters 7 hat den Vorteil, dass der Abstand zwischen zwei Modulen 2 z.B. auch bei Witterungseinflüssen erhalten bleibt und diese daher nicht speziell fixiert werden müssen. In einer anderen Ausführungsvariante ist kein permanenter Platzhalter vorgesehen, sondern die Module 4 werden beabstandet zueinander zur Bildung des Zwischenraums 3 angeordnet und z.B. mittels Klemmung am Modulträger 4 fixiert.

Das Tageslicht, wie durch die Pfeile 6 angedeutet, kann in den Zwischenraum 3 einfallen und wird über die Dachhaut 5 hinter die Module 2 reflektiert. Diese Variante ist auch vorteilhaft für den Transport des Tageslichtes 6 durch die Dachhaut 5 in das Gebäude, wenn diese zumindest teilweise lichtdurchlässig, insbesondere zumindest bereichsweise durchsichtig/transparent, ist.

In Fig. 4 ist eine andere Ausführungsvariante gezeigt, bei welcher der Zwischenraum 3 mit einem Platzhalter belegt ist, der einen Rahmen 7 mit einem Glas oder einem lichtdurchlässigen Kunststoff 8 aufweist. Das Glas oder der lichtdurchlässige Kunststoff 8 dient als Schutz vor Verschmutzungen.

In Fig. 5 ist eine weitere Ausführungsvariante gezeigt, bei welcher nebst dem Platzhalter aus Rahmen 7 und Glas oder dem lichtdurchlässigen Kunststoff 8 ein länglicher Körper 9 mit zwei reflektierenden und/oder beugenden und/oder streuenden ebenen Seitenflächen vorgesehen ist, welche das Licht seitlich ablenken können. Der Körper 9 kann z.B. am Platzhalter 7, 8 befestigt sein.

In Fig. 6 ist eine weitere Ausführungsvariante gezeigt, bei welcher nebst dem Platzhalter aus Rahmen 7 und Glas oder der lichtdurchlässige Kunststoff 8 ein länglicher Körper 10 mit zwei reflektierenden und/oder beugenden Seitenflächen vorgesehen ist, welche konkav gekrümmt sind und welche das Licht seitlich ablenken können. Eine Seitenfläche kann z.B. im Querschnitt gesehen parabolisch geformt sein,

In Fig. 7 ist eine weiteren Ausführungsvariante gezeigt, welche als Platzhalter einen Rahmen 7 aufweist, der mit einer transparenten Abdeckung 11, z.B. einem Glas oder der lichtdurchlässige Kunststoff, mit Linsenform versehen ist. Das Element 11 wirkt als optische Linse, sodass einfallendes Tageslicht gebündelt und/oder umgelenkt wird.

In Fig. 8 ist eine weitere Ausführungsvariante gezeigt, bei welcher nebst einem Platzhalter mit Rahmen 7 und der Abdeckung mit Linsenform 11 Lichtleiter 12 vorgesehen sind, deren jeweiliger Eingang im Zwischenraum 3 und deren jeweiliger Ausgang im Bereich zwischen Modul 2 und Dachhaut 5 angeordnet sind, so dass Tageslicht in die Eingänge eingekoppelt und über die Ausgänge kontrolliert unter die Module 2 gebracht werden kann.

Die Elemente 8, 11 gemäss den Fig. 4-8 können aus Glas oder einem anderen Material, z.B. Kunststoff sein, das für Tageslicht zumindest teilweise durchlässig ist. Die Elemente 8 können mit einer oder mehreren Beschichtungen und/oder Oberflächenstruktur versehen sein, die eine Oberflächenreflektion des Tageslichts vom Dach weg verhindern oder reduzieren.

### Bezugszeichen

- 1: Gebäude
- 1a: Fachwerkprofil
- 2: Modul
- 3: Zwischenraum
- 4: Modulträger, z.B. Einlegeprofil
- 4a: Einschubprofil
- 4b: Klemme
- 4c: Schraube, z.B. Selbstbohrschraube
- 5: Dachhaut, z.B. Membrane einer Leichtbauhalle
- 5a: Membrantasche
- 6: Tageslicht, z.B. Sonnenlicht
- 7: Rahmen
- 8: Abdeckung, z.B. Glas
- 9: Körper mit ebenen Flächen
- 10: Körper mit gekrümmten Flächen
- 11: Abdeckung, z.B. Glas, mit Linsenform
- 12: Lichtleiter

## Patentansprüche

1. Verfahren zur Montage von Modulen (2), vorzugsweise Photovoltaikmodulen und/oder thermischen Solarmodulen, auf einem Dach eines Gebäudes (1), insbesondere auf einer Leichtbauhalle mit einer Membrane (5) als Dach, bei welchem Verfahren mindestens ein Teil der Module beabstandet zueinander montiert wird zur Bildung eines Zwischenraums (3) zwischen zwei Modulen, wobei Umlenkungsmittel (5, 9-12) vorgesehen werden, die eingerichtet sind, Tageslicht (6), welches in den Zwischenraum einfällt, umzulenken auf die jeweilige Rückseite der Module, zwischen welchen sich der Zwischenraum befindet.

2. Verfahren nach Anspruch 1, bei welchem Umlenkungsmittel vorgesehen werden, welche Körper (9-12) zum Umlenken des Tageslichts (6) umfassen, die jeweils zwischen zwei Modulen (2) angeordnet werden, zwischen welchen sich ein Zwischenraum (3) befindet.

3. Verfahren nach Anspruch 2, wobei mindestens einer der Körper (9-12) mindestens eines der folgenden Merkmale A1-A4 aufweist:
A1) der Körper ist länglich;
A2) der Körper umfasst mindestes eine Oberfläche, welche das Tageslicht (6) zumindest teilweise reflektiert und/oder streut und/oder beugt, vorzugsweise ist die Oberfläche eben oder gekrümmt, insbesondere konkav gekrümmt;
A3) der Körper umfasst zwei Oberflächen, welche das Tageslicht zumindest teilweise reflektieren und/oder streuen und/oder beugen und welche vorzugsweise symmetrisch am Körper angeordnet sind und/oder welche vorzugsweise von einer Scheiteilinie des Körpers seitlich abgehen,
A4) der Körper umfasst Lichtleiter (12) zur Aufnahme und Umlenken von Tageslicht.

4. Verfahren nach einem der vorangehenden Ansprüche, bei welchem Umlenkungsmittel (5, 9-12) vorgesehen werden, welche das Dach (5) umfassen, indem dieses ausgestaltet ist, zumindest einen Teil des Tageslichts (6) zu reflektieren und/oder zu streuen.

5. Verfahren nach einem der vorangehenden Ansprüche, bei welchem zur Bildung des Zwischenraums (3) zwischen zwei Modulen (2) ein Platzhalter (7, 8, 11) angeordnet wird.

6. Verfahren nach Anspruch 5, wobei mindestens einer der Platzhalter mindestens eines der folgenden Merkmale aufweist B1)-B2):
B1) der Platzhalter weist einen Rahmen (7) auf, der vorzugsweise rechteckig ist;
B2) der Platzhalter weist eine Abdeckung (8, 11) auf, welche das Tageslicht (6) zumindest teilweise durchlässt, vorzugsweise ist die Abdeckung aus Glas und/oder Kunststoff und/oder wirkt als Linse.

7. Verfahren nach einem der vorangehenden Ansprüche, bei welchem mindestens eines der folgenden Merkmale C1)-C7) vorgesehen wird:
C1) der Abstand zwischen zwei Modulen (2) zur Bildung des Zwischenraums (3) beträgt mindestens 10 cm, vorzugsweise mindestens 15 cm;
C2) der Abstand (A) zwischen der Endseite eines Moduls, welches an einen Zwischenraum angrenzt, und des Daches beträgt mindestens 5 cm, vorzugsweise mindestens 10 cm;
C3) die Module werden jeweils zur Bildung von Reihen an Modulträgern (6) angebracht, wobei die Module in einer jeweiligen Reihe beabstandet zueinander montiert werden zur Bildung des jeweiligen Zwischenraums und wobei vorzugsweise benachbarte Reihen lückenlos zueinander angeordnet werden;
C4) die Module werden jeweils zur Bildung von Reihen an Modulträgern (6) angebracht, wobei die Module in einer jeweiligen Reihe vorzugsweise lückenlos zueinander montiert werden und wobei benachbarte Reihen zur Bildung des jeweiligen Zwischenraums beabstandet zueinander angeordnet werden;
C5) die Zwischenräume werden auf einem Raster angeordnet, welches vorzugsweise rechteckig ist;
C6) die Zwischenräume werden in Linien angeordnet, die quer zu den Reihen verlaufen, in welchen die Module angeordnet sind;
C7) die Module werden in der gleichen Schräglage wie das Dach angeordnet.

8. Beleuchtungseinrichtung zur Verwendung in dem Verfahren nach einem der vorangehenden Ansprüche, umfassend:
Platzhalter (7, 8), wobei der jeweilige Platzhalter zwischen zwei Modulen (2) anbringbar ist zur Bildung eines Zwischenraums (3) dazwischen, und
Umlenkungsmittel (5, 9-12), die eingerichtet sind, Tageslicht (6), welches in den Zwischenraum (3) einfällt, auf die jeweilige Rückseite der Module zu lenken, zwischen welchen sich der Zwischenraum befindet.

9. Beleuchtungseinrichtung nach Anspruch 8, wobei die Umlenkungsmittel Körper (9-12) zum Umlenken von Tageslichts und/oder eine Dachhaut (5), insbesondere Membrane, umfassen, die ausgestaltet ist, zumindest einen Teil des Tageslichts zu reflektieren und/oder zu streuen.

10. Beleuchtungseinrichtung nach Anspruch 9, wobei mindestens einer der Körper (9-12) mindestens eines der folgenden Merkmale D1-D4 aufweist:
D1) der Körper ist länglich;
D2) der Körper umfasst mindestes eine Oberfläche, welche das Tageslicht (6) zumindest teilweise reflektiert und/oder streut und/oder beugt, vorzugsweise ist die Oberfläche eben oder gekrümmt, insbesondere konkav gekrümmt;
D3) der Körper umfasst zwei Oberflächen, welche das Tageslicht zumindest teilweise reflektieren und/oder streuen und/oder beugen und welche vorzugsweise symmetrisch am Körper angeordnet sind und/oder welche vorzugsweise von einer Scheiteilinie des Körpers seitlich abgehen;
D4) der Körper umfasst Lichtleiter (12) zur Aufnahme und Umlenken von Tageslicht.

11. Beleuchtungseinrichtung nach einem der Ansprüche 8-10, welche weiter Platzhalter aufweist, die zur Bildung des Zwischenraums (3) zwischen zwei Modulen (2) anordbar sind.

12. Beleuchtungseinrichtung nach Anspruch 11, wobei mindestens einer der Platzhalter mindestens eines der folgenden Merkmale E1-E2 aufweist:
E1) der Platzhalter weist einen Rahmen (7) auf, der vorzugsweise rechteckig ist;
E2) der Platzhalter weist eine Abdeckung (8, 11) auf, welche das Tageslicht (6) zumindest teilweise durchlässt, vorzugsweise ist die Abdeckung aus Glas und/oder Kunststoff und/oder wirkt als Linse.

13. Modulmontagesystem zur Verwendung in dem Verfahren nach einem der Ansprüche 1-7, umfassend:
eine Beleuchtungseinrichtung nach einem der Ansprüche 8-12,
Modulträger (4), an welchen die Module (2) und vorzugsweise die Platzhalter anbringbar sind, und
Profile (4a), an welchem die Modulträger befestigbar sind, wobei vorzugsweise die Profile Einschubprofile sind, welche in Taschen (5a) einfügbar sind, die am Dach angebracht sind, vorzugsweise in Taschen aus Membranmaterial, aus welchem das Dach einer Leichtbauhalle gefertigt ist.

14. Gebäude (1), insbesondere eine Leichtbauhalle, welche eine Fachwerkstruktur aus Fachwerkprofilen (1a) und eine Membrane zur Bildung des Daches aufweist, wobei auf dem Dach des Gebäudes Module (2) gemäss dem Verfahren nach einem der Ansprüche 1-7 montiert sind.
